Europäisches Patentamt

European Patent Office

Office européen des brevets

(19)

(11) Veröffentlichungsnummer : **0 446 383 B1**

(12) **EUROPÄISCHE PATENTSCHRIFT**

(45) Veröffentlichungstag der Patentschrift :
**21.09.94 Patentblatt 94/38**

(51) Int. Cl.$^5$ : **H02M 3/335**

(21) Anmeldenummer : **90104536.9**

(22) Anmeldetag : **09.03.90**

(54) **Eingangsstromspitzen vermeidendes Schaltnetzteil mit sinusförmiger Stromaufnahme.**

(43) Veröffentlichungstag der Anmeldung :
**18.09.91 Patentblatt 91/38**

(45) Bekanntmachung des Hinweises auf die
Patenterteilung :
**21.09.94 Patentblatt 94/38**

(84) Benannte Vertragsstaaten :
**AT BE CH DE ES FR GB IT LI NL SE**

(56) Entgegenhaltungen :
**DE-A- 3 221 404**
**US-A- 4 885 675**
**NEW ELECTRONICS, Incorporating Electro-**
**nics Today, vol. 23, no. 1, January 1990, Lon-**
**don, GB, Seiten 34-36 ; D. Pedder :**
**"Technological advances raise interest in**
**psus"**

(73) Patentinhaber : **Siemens Nixdorf**
**Informationssysteme Aktiengesellschaft**
**Fürstenallee 7**
**D-33102 Paderborn (DE)**

(72) Erfinder : **Rettenmaier, Helmut, Dipl.-Ing. (TU)**
**Buchenstrasse 16**
**D-8934 Grossaitingen (DE)**
Erfinder : **Busch, Peter, Dipl.-Ing. (FH)**
**Flugfeldstrasse 16**
**D-8900 Augsburg (DE)**

(74) Vertreter : **Fuchs, Franz-Josef, Dr.-Ing. et al**
**Postfach 22 13 17**
**D-80503 München (DE)**

**Beschreibung**

Die Erfindung betrifft ein Eingangsstromspitzen vermeidendes Schaltnetzteil mit sinusförmiger Stromaufnahme gemäß den Merkmalen des Oberbegriffs des Anspruchs 1.

Durch den dem Eingangsnetzgleichrichter nachgeschalteten Eingangskondensator eines Schaltnetzteils können sehr hohe Eingangsstromspitzen auftreten, da im Betrieb über den Eingangsnetzgleichrichter nur im Bereich der Eingangsscheitelspannung Nachladeströme fließen. Als Folge davon wird der Leistungsfaktor des Schaltnetzteils auf einen Wert von größenordnungsmäßig 0,4 bis 0,7 gedrückt. Ein weiteres Problem ist der plötzliche hohe Ladestrom beim Einstecken bzw. Einschalten des Schaltnetzteils bzw. beim Nachladen nach einem Ausfall der Eingangsnetzwechselspannung bzw. nach einem Einbruch derselben während des Betriebs des Schaltnetzteils. Je sinusähnlicher der Eingangsstrom des Schaltnetzteils ist, umso besser ist dessen Leistungsfaktor. Am günstigsten ist es, wenn der Eingangsstrom einen sinusförmigen Verlauf aufweist.

Zur Verbesserung des Leistungsfaktors wurden entweder schwere und teure Eingangsdrosseln verwendet oder eine aktive Oberwellenfilterung durch vorgeschaltete Hochsetzsteller mit einer Stromsteuerung über Multiplizierer durchgeführt. Der Nachteil ist, daß trotz des hohen Aufwandes keine Netztrennung gegeben ist und daß die Eingangsstromspitzen beim Einstecken bzw. Einschalten des Schaltnetzteils immer noch vorhanden sind. Um diese zu reduzieren, werden Heißleiter als Vorwiderstände oder Vorwiderstände, die im Betrieb durch z.B. Triac-Bauteile oder Relais-Kontakte überbrückt sind, verwendet. Bei kurzen Netzeinbrüchen sind diese jedoch wirkungslos.

Zur Vermeidung der hohen Eingangsstromspitzen wurden auch sogenannte Null-Spannungsschalter entwickelt, die aber ebenfalls sehr aufwendig sind.

Aus dem Dokument New Electronics, Incorporating Electronics Today, Vol. 23, No. 1, Jan. 1990, London GB, Seiten 34 bis 36 ist ein Artikel von D. Pedder mit dem Titel "Technological advances raise interest in psus" bekannt, in dem ein Schaltnetzteil mit sinusförmiger Stromaufnahme beschrieben ist, das aus einem an sich bekannten Hochsetzsteller und einem an sich bekannten Tief/Hochsetzsteller zusammengesetzt ist. Zum bewerkstelligen einer sinusförmigen Stromaufnahme arbeitet das Schaltnetzteil mit einer Strombegrenzung. Durch die Zusammenschaltung zweier jeweils vollständiger Wandlertypen ist der Aufwand für dieses Schaltnetzteil jedoch sehr groß.

Aufgabe der Erfindung ist es deshalb, ein Schaltnetzteil mit sinusförmiger Stromaufnahme anzugeben, das einen einfachen Aufbau aufweist.

Diese Aufgabe wird bei einem Schaltnetzteil der eingangs genannten Art durch die Merkmale des kennzeichnenden Teils des Anspruchs 1 gelöst. Ein derartiges Schaltnetzteil weist folgende Vorteile auf: Keine Eingangsstromspitzen; das Schaltnetzteil ist netztrennend; der Eingangsstrom ist sinusförmig, weshalb der Leistungsfaktor des Geräts besonders gut ist, und der Mittelwert der Ausgangsgleichspannung ist unabhängig von der angeschlossenen Last und der Eingangsnetzwechselspannung. Weitere Vorteile sind, daß ein Eingangskondensator nicht mehr notwendig ist, wodurch das Schaltnetzteil billiger wird und mit geringeren Abmessungen konstruiert werden kann. Da es sich bei den Eingangskondensatoren meist um relativ große Bauteile handelt, wird selbst dann Platz eingespart, wenn die Ausgangskondensatoren, die in der Regel bereits vorhanden sind, in einer vergrößerten Version eingesetzt werden.

Nachfolgend werden mehrere Ausführungsbeispiele der Erfindung anhand der Zeichnung näher erläutert. Dabei zeigen:

FIG 1        ein Prinzipschaltbild eines Schaltnetzteils mit sinusförmiger Stromaufnahme gemäß der Erfindung,

FIG 2 - 5    Prinzipschaltungen von Tiefsetzstellern für einen Spannungsregler nach FIG 1,

FIG 6        einen qualitativen Stromverlauf des Eingangsstroms eines Schaltnetzteils nach FIG 1 und

FIG 7        eine Tafel mit den Tastverhältnissen der Schalter der als Spannungsregler eingesetzten Tiefsetzsteller gemäß der FIG 2 - 5.

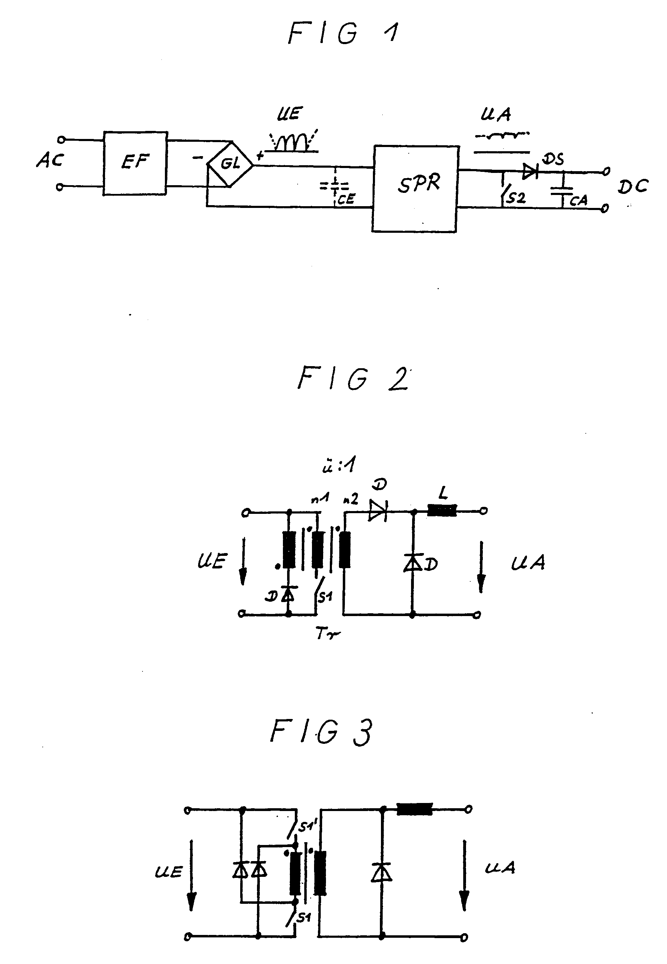

Das in der FIG 1 dargestellte Schaltnetzteil weist ein Eingangsfilter EF, daran angeschlossen einen Eingangsnetzgleichrichter GL, an diesen angeschlossen einen Spannungsregler SPR und diesem wiederum nachfolgend einen Kurzschlußschalter S2 mit einer in einem Ausgangslängszweig vor dem Ausgangskondensator CA angeordneten und in Richtung Ausgang gepolten Kurzschlußsicherungsdiode DS sowie einen zwischen den Ausgangsklemmen angeordneten Ausgangskondensator CA auf. Das Schaltnetzteil ist an eine Eingangsnetzwechselspannung AC angeschlossen, aus der die stabilisierte Ausgangsgleichspannung DC gewonnen wird.

Die Eingangsnetzwechselspannung AC kann beispielsweise Scheitelwerte von ca. 120 bis 370 Volt annehmen. Gemäß dem Ausführungsbeispiel wird nur eine Ausgangsgleichspannung DC, z.B. 12 Volt, ausgegeben. Sollen gleichzeitig mehrere Ausgangsgleichspannungen ausgegeben werden, sind entsprechende Ausgangskreise innerhalb des Spannungsreglers SPR vorzusehen.

Das Eingangsfilter EF filtert Störungen der Eingangsnetzwechselspannung AC und des Schaltnetzteils heraus. Der Eingangsnetzgleichrichter GL richtet die Eingangsnetzwechselspannung AC gleich und erzeugt unter der Annahme, daß ein Zweiweggleichrichter verwendet wird, eine pulsierende Eingangsgleichspannung UE, wie sie in der FIG skizzenhaft angedeutet ist. Der Spannungsregler SPR regelt die Eingangsgleichspannung UE zu einer geregelten Ausgangsgleichspannung UA entsprechend einem vorgegebenen Mittelwert. Der Verlauf der Ausgangsgleichspannung UA ist in der FIG skizzenhaft angegeben. Die Ausgangsgleichspannung UA weist systembedingt noch eine Restwelligkeit auf. Der Kurzschlußschalter S2 ermöglicht die Aufrechterhaltung der Ausgangsspannung für eine Zeitspanne immer dann, wenn der Augenblickswert der Eingangsnetzwechselspannung unter eine systembedingte minimale Eingangsspannung sinkt. Die Kurzschlußsicherungsdiode DS verhindert ein Entladen des Ausgangskondensators CA, wenn der Kurzschlußschalter S2 geschlossen ist. Der Ausgangskondensator CA reduziert die Größe der Restwelligkeit. Durch Vergrößern des Ausgangskondensators CA kann die Restwelligkeit verkleinert werden. Ein Vorteil des Vergrößerns des Ausgangskondensators CA liegt ferner darin, daß bei Ausfall der Eingangsnetzwechselspannung AC die Ausgangsgleichspannung DC länger nutzbringend am Ausgangskondensator CA abgegriffen werden kann.

Bei dem Spannungsregler SPR handelt es sich um einen nach dem Tiefsetzsteller-Prinzip arbeitenden DC/DC-Wandler, der in Abhängigkeit vom Augenblickswert der dem Schaltnetzteil zugeführten sinusförmigen Eingangsnetzwechselspannung schnell getaktet und so ausgebildet ist, daß eine proportional zur Eingangsspannung geregelte Stromaufnahme und eine aktive Strombegrenzung durch Begrenzung des Regelbereichs stattfindet und zwischen dessen Eingang und Ausgang eine Netztrennung besteht. Spannungsregler, die für eine solche Anwendung geeignet sind, sind an sich bekannt. Vom Prinzip her könnte es sich beispielsweise um einen 1-Transistor-Eintakt-, einen 2-Transistor-Eintakt-, einen Gegentakt- oder um einen stromgespeisten Gegentaktdurchflußwandler handeln. Die Taktfrequenz ist sehr viel größer als die Wechselfrequenz der sinusförmigen Eingangsnetzwechselspannung AC. Sie beträgt für das Ausführungsbeispiel 50 kHz.

Gegenüber bekannten Schaltnetzteilen ist kein Eingangskondensator CE zwischen dem Eingangsnetzgleichrichter GL und dem Spannungsregler SPR vorgesehen, weshalb dieser in der FIG nur gestrichelt gezeichnet ist. Der die unerwünschten Eingangsstromspitzen verursachende Eingangskondensator CE ist auf den Ausgang des Schaltnetzteils verlegt. Im Ausführungsbeispiel treten deshalb beim Laden bzw. Nachladen des Ausgangskondensators CA wegen der entsprechenden Steuerung des Eingangsstroms im Spannungsregler SPR keine Eingangsstromspitzen mehr auf. Dadurch wird der Leistungsfaktor des Schaltnetzteils verbessert.

Aus Gründen des Kompromisses, der zwischen der Größe des Ausgangskondensators CA zur Reduzierung der Restwelligkeit auf der Ausgangsgleichspannung DC und der Möglichkeit der Aufrechthaltung der Ausgangsgleichspannung DC bei Ausfall der Eingangsnetzwechselspannung AC bzw. bei deren Einbruch zu schließen ist, wird die Ausgangsgleichspannung DC noch eine, wenn auch geringe, Restwelligkeit aufweisen, doch spielt dies für viele Anwendungsfälle keine Rolle. Solche Anwendungsfälle sind z.B. die Betreibung von Halogenlampen, von Motoren, von Ladegeräten, von Leistungsendstufen, aber auch die Verwendung als Eingangsteil für batteriegepufferte Stromversorgungen für Datenverarbeitungsanlagen.

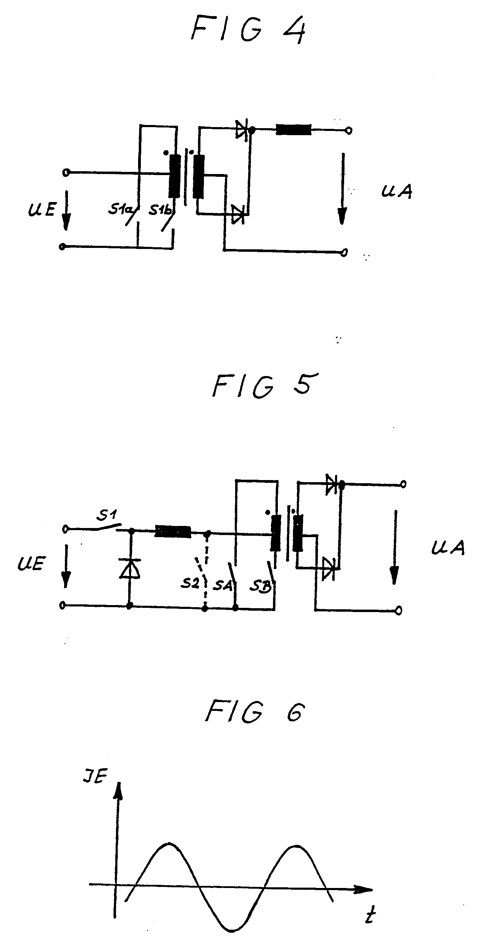

In den FIG 2 bis FIG 5 sind Prinzipschaltungen eines Durchflußwandlers für den in FIG 1 als Spannungsregler eingesetzten Tiefsetzsteller angegeben. Bei der in FIG 2 dargestellten Prinzipschaltung handelt es sich dabei um einen 1-Transistor-Eintaktdurchflußwandler mit einem getakteten Schalter S1. Die in FIG 3 dargestellte Prinzipschaltung zeigt einen 2-Transistor-Eintaktdurchflußwandler mit zwei getakteten Schaltern S1 und S1'. Bei der in FIG 4 dargestellten Prinzipschaltung handelt es sich um einen Gegentaktdurchflußwandler mit zwei getakteten Schaltern S1a und S1b. Bei der in FIG 5 dargestellten Prinzipschaltung schließlich handelt es sich um einen stromgespeisten Gegentaktdurchflußwandler mit drei getakteten Schaltern S1, SA und SB. Alle Prinzipschaltungen sind an sich bekannt (siehe beispielsweise ELEKTRONIK 1978, Heft 4, Seiten 102 - 104).

Die einzelnen Durchflußwandler weisen neben den genannten Schaltern noch jeweils Dioden D, Übertrager Tr und Drosseln L auf, die der Einfachheit halber nur in FIG 2 bezeichnet sind. Da eine sehr hohe Taktfrequenz der Schalter S verwendet ist, weisen die Übertrager kleine Abmessungen auf.

Allgemein errechnet sich die Ausgangsspannung UA der Durchflußwandler aus der Formel:

$$UA = UE \cdot 1/\ddot{u} \cdot v_T$$

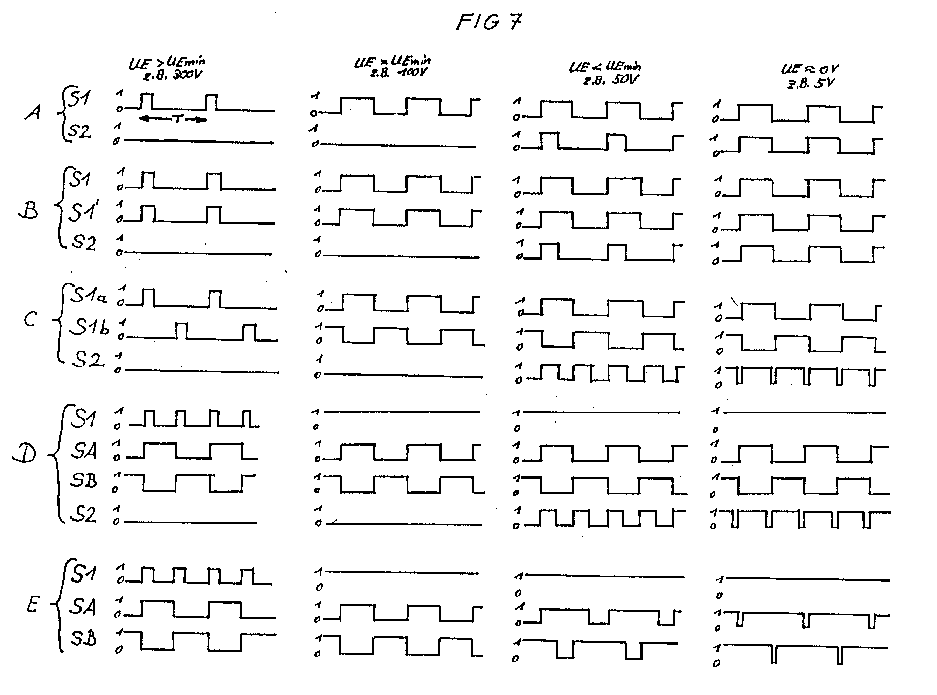

UE ist die Eingangsspannung des Spannungsreglers SPR bzw. des darin enthaltenen Tiefsetzstellers. ü ist das Übersetzungsverhältnis des Übertragers Tr, das sich aus dem Verhältnis der Windungszahlen, z.B. $n1$ und $n2$, der Wicklungen des Übertragers ergibt. $v_T$ schließlich ist das Tastverhältnis der getakteten Schalter S, das das Zeitverhältnis zwischen offenem und geschlossenem Zustand eines Schalters während einer Periodendauer T (FIG 7) angibt. $v_{Tmax}$ hängt vom Auf- und Abmagnetisierungsverhalten des Übertragers Tr ab und kann Werte von 50 bis 100 % annehmen.

Unter der Annahme, daß die Ausgangsspannung UA konstant ist, ergibt sich bei einem maximalen Tastverhältnis $v_{Tmax}$ eine minimale Eingangsspannung UEmin für den jeweiligen Tiefsetzsteller gemäß der Formel:

3

$$UEmin = UA \cdot ü/v_{Tmax}$$

Die minimale Eingangsspannung UEmin ist diejenige Eingangsspannung, bei der der Tiefsetzsteller gerade noch als solcher arbeitet. Das heißt, daß unterhalb der minimalen Eingangsspannung UEmin kein Eingangsstrom fließt. Bei entsprechender Steuerung der Schalter S, die im Zusammenhang mit der FIG 7 näher erläutert wird, fließt ein sinusförmiger Eingangsstrom IE, wie er qualitativ in der FIG 6 angegeben ist.

Aus der obigen Formel für die minimale Eingangsspannung UEmin ergibt sich, daß die Ausgangsspannung UA kurzgeschlossen werden muß, damit unterhalb der minimalen Eingangsspannung UEmin noch ein Strom fließt. Der Kurzschluß wird von dem Kurzschlußschalter S2 (FIG 1) bewerkstelligt.

Es sind zwei Fälle möglich:

$$UE \geqq UA \cdot ü/v_{Tmax}$$

Der Tiefsetzsteller arbeitet in einem normalen Tiefsetzstellerbetrieb. Der Kurzschlußschalter S2 bleibt geöffnet.

$$UE < UA \cdot ü/v_{Tmax}$$

Der Tiefsetzsteller arbeitet mit dem maximalen Tastverhältnis. Der Kurzschlußschalter schließt gleichzeitig mit den entsprechenden Schaltern des Tiefsetzstellers, öffnet aber früher wieder. Die Zuordnung des Kurzschlußschalters S2 zu den Schaltern des Tiefsetzstellers, mit denen er gleichzeitig schließt, kann in FIG 7 ersehen werden.

In FIG 7 sind für die verschiedenen Tiefsetzstellertypen gemäß der FIG 2 bis FIG 5, die hier den Fällen A bis D zugeordnet sind, die Tastverhältnisse der jeweiligen Schalter S für vier Augenblickswerte der Eingangsspannung UE dargestellt. Die vier Augenblickswerte sind z.B. 300 V, die aus einem Eingangsspannungsbereich von UE>UEmin herausgegriffen ist; 100 V, die beispielsweise eine Eingangsspannung UE angibt, die der minimalen Eingangsspannung UEmin entspricht; 50 V, die aus einem Spannungsbereich UE<UEmin herausgegriffen ist und schließlich 5 V, die eine Eingangsspannung UE nahe 0V angibt. Den jeweils an den linken Seiten der Kurven angegebenen Bezeichnungen 1 und 0 sind folgende Bedeutungen zugeordnet:

1: der betreffende Schalter ist eingeschaltet

0: der betreffende Schalter ist ausgeschaltet.

Die Tastverhältnisse ändern sich mit den Augenblickswerten der Eingangsspannung UE entsprechend stufenlos. Da die Eingangsspannung UE die gleichgerichtete Eingangsnetzwechselspannung AC ist, ändert sich die Eingangsspannung UE entsprechend der Änderung der Augenblickswerte der sinusförmigen Eingangsnetzwechselspannung AC. Qualitativ werden deshalb die Tastverhältnisse der betreffenden Schalter S entsprechend der Eingangsnetzwechselspannung AC geändert.

Im Einzelnen erfolgt eine solche Steuerung der Schalter S, daß sich für die verschiedenen Fälle folgende Tastverhältnisse für die betreffenden Schalter ergeben. Dabei werden zunächst nur die Fälle A - D betrachtet und diese wiederum ohne Berücksichtigung des Kurzschlußschalters S2. Für die Betrachtung der Tastverhältnisse wird angenommen, daß sich die Eingangsspannung von einem vorgegebenen Scheitelwert ausgehend bis zu dem Wert 0 ändert. Es wird also nur eine Sinusviertelwelle betrachtet. Für die übrigen Sinusviertelwellen gilt Entsprechendes, wobei klar ist, daß bei einer Änderung der Eingangsspannung von 0 bis zu dem angesprochenen Scheitelwert sich die Tastverhältnisse entsprechend umgekehrt ändern. Es zeigen:

Fall A: Im Bereich oberhalb der minimalen Eingangsspannung UEmin erfolgt eine Änderung des Tastverhältnisses des Schalters S1 von 0 bis $v_{Tmax}$. $v_{Tmax}$ hängt von dem Windungsverhältnis der beiden Primärwicklungen des Übertragers Tr ab. Im Ausführungsbeispiel ist $v_{Tmax}$ mit 50 % gewählt. Im Bereich unterhalb der minimalen Eingangsspannung UEmin bleibt das Tastverhältnis mit $v_{Tmax}$ gleich.

Fall B: Die Schalter S1 und S1' werden synchron gesteuert. Für die Steuerung gilt gleiches wie für den Fall A, mit der Maßgabe, daß $v_{Tmax}$ = 50 % ist.

Fall C: Die Schalter S1a und S1b werden wechselweise nicht überlappend geschaltet. Dabei erfolgt im Bereich oberhalb der minimalen Eingangsspannung UEmin eine Änderung der Tastverhältnisse von 0 bis 50 %. Im Bereich unterhalb der minimalen Eingangsspannung bleibt das Tastverhältnis mit 50 % gleich. Zur Berechnung der minimalen Eingangsspannung UEmin sind die Tastverhältnisse der beiden Schalter S1a und S1b zu addieren.

Fall D: Im Bereich oberhalb der minimalen Eingangsspannung UEmin erfolgt für den Schalter S1 eine Änderung des Tastverhältnisses von 0 bis 100 %. Die Tastverhältnisse der Schalter SA und SB sind in diesem Bereich mit 50 % jeweils gleichbleibend, wobei die Schalter SA und SB zueinander wechselweise geschaltet sind. Der Schalter S1 schaltet jeweils mit einem der beiden wechselweise getakteten Schalter SA und SB. Im Bereich unterhalb der minimalen Eingangsspannung UEmin ist das Tastverhältnis des Schalters S1 mit 100 % gleichbleibend, während sich die Tastverhältnisse der Schalter SA und SB von 50 auf 100 % ändern. Die beiden Schalter SA und SB sind dabei hier wechselweise überlappend geschaltet.

Für den Kurzschlußschalter S2 ergeben sich für die Fälle A bis D folgende Tastverhältnisse:

UE $\geqq$ UEmin: Für alle Fälle A bis D weist das Tastverhältnis 0 % auf, was bedeutet, daß der Kurzschußschalter ständig offen ist. Das Schaltnetzteil arbeitet somit in einem normalen Tiefsetzstellerbetrieb.

UE < UEmin: Das Tastverhältnis ändert sich in Abhängigkeit vom Augenblickswert der Eingangsspannung UE. Dabei ändert sich das Tastverhältnis in den Fällen A und B von 0 bis 50 % und in den Fällen C und D von 50 bis 100 %. Das Schaltnetzteil arbeitet hier gleichzeitig in einem Tief- und einem Hochsetzbetrieb. Im Fall A schaltet der Kurzschlußschalter S2 jeweils mit dem Schalter S1, im Fall B jeweils mit dem Schalter S1 bzw. S1′, im Fall C jeweils mit einem der beiden wechselweise getakteten Schalter S1a und S1b und im Fall D jeweils mit einem der beiden wechselweise getakteten Schaltern SA und SB.

Der Fall D ist, wie den anderen bisherigen Fällen auch, zugrundegelegt, daß der Kurzschlußschalter S2 dem Tiefsetzsteller nachgeschaltet ist. In einem weiteren Ausführungsbeispiel kann der Kurzschlußschalter S2 aber auch auf der Primärseite des Tiefsetzstellers angeordnet sein. Beispielsweise kann er vor dem im Tiefsetzsteller eingesetzten Übertrager (in FIG 5 gestrichelt gezeichnet) angeordnet sein, wobei er einerseits mit einem Mittelabgriff der primären Übertragerwicklung verbunden und andererseits auf Masse bezogen angeschlossen ist. Der Vorteil der Anordnung des Kurzschlußschalters S2 an dieser Stelle liegt beispielsweise darin, daß der Kurzschlußschalter S2 zwar mehr Spannung, dafür aber weniger Strom schalten muß und daß eine Kurzschlußsicherungsdiode DS, die verhindert, daß bei geschlossenem Kurzschlußschalter S2 der Ausgangskondensator CA kurzgeschlossen wird, entfällt. Die Steuerung des Tastverhältnisses des Kurzschlußschalters S2 erfolgt so, wie für den Fall D angegeben.

Der Fall E entspricht einem weiteren Ausführungsbeispiel und stellt einen Sonderfall der vorbeschriebenen Fälle D dar. Bei entsprechender Steuerung der im als stromgespeisten Gegentaktdurchflußwandler ausgebildeten Tiefsetzsteller enthaltenen Schalter S1, SA und SB kann der Kurzschlußschalter S2 entfallen. In diesem Fall wird der Kurzschlußschalter S2 durch die im Gegentakt arbeitenden Schalter SA und SB ersetzt. Die Steuerung der betreffenden Schalter S1, SA und SB erfolgt so, daß sich unter der gleichgebliebenen Voraussetzung der vormals erwähnten Änderung der Eingangsspannung folgende Tastverhältnisse ergeben:

UE $\cong$ UEmin: Das Tastverhältnis des Schalters S1 weist eine Änderung von 0 bis 100 % auf, während die Tastverhältnisse der Schalter SA und SB mit jeweils 50 % gleich bleiben. Der Schalter S1 schaltet hierbei jeweils mit einem der beiden wechselweise getakteten Schalter SA und SB.

UE < UEmin: Das Tastverhältnis des Schalters S1 bleibt mit 100 % gleich, während sich die Tastverhältnisse der Schalter SA und SB, die wechselweise überlappend geschaltet sind, von 50 bis 100 % ändern.

## Patentansprüche

1.  Eingangsstromspitzen vermeidendes Schaltnetzteil mit sinusförmiger Stromaufnahme, bestehend im wesentlichen aus einem Eingangsnetzgleichrichter (GL), einem nachgeschalteten Spannungsregler (SPR) und gegebenenfalls einem Ausgangskondensator (CA), wobei der Spannungsregler (SPR) als in Abhängigkeit vom Augenblickswert einer dem Schaltnetzteil zugeführten sinusförmigen Eingangsnetzwechselspannung (AC) schnell getakteter und dabei den Eingangsstrom (JE) proportional zur Eingangsnetzwechselspannung (AC) regelnder, netztrennender Tiefsetzsteller mit aktiver Strombegrenzung ausgebildet ist,
    **dadurch gekennzeichnet**, daß ein gegebenenfalls vergrößerter Ausgangskondensator (CA) vorgesehen ist und daß zwischen den Ausgangsklemmen des Tiefsetzstellers ein Kurzschlußschalter (S2) mit einer in einem Ausgangslängszweig vor dem Ausgangskondensator (CA) angeordneten und in Richtung Ausgang gepolten Kurzschlußsicherungsdiode (DS) angeordnet ist, der im Verhältnis zum Tiefsetzsteller derart getaktet ist, daß die Kombination aus Tiefsetzsteller und nachfolgendem Kurzschlußschalter (S2) abhängig von einer minimalen Eingangsspannung (UEmin), bei der der Tiefsetzsteller gerade noch als solcher arbeitet, einmal nur als Tiefsetzsteller und einmal gleichzeitig als Tiefsetzsteller und Hochsetzsteller arbeitet.

2.  Schaltnetzteil nach Anspruch 1,
    **dadurch gekennzeichnet**, daß der Tiefsetzsteller entsprechend dem Prinzip eines 1-Transistor-Eintaktdurchflußwandlers ausgebildet ist, der einen getakteten Schalter (S1) aufweist, der derart getaktet ist, daß sich gemäß der Änderung des Augenblickswertes der sinusförmigen Eingangsnetzwechselspannung (AC) von einer vorgegebenen Scheitelspannung aus bis zu der minimalen Eingangsspannung (UEmin) entsprechend ein dem Schalter (S1) zugeordnetes Tastverhältnis im Bevon 0 bis zu einem vorgegebenen $v_{Tmax}$ ändert, während es bei einer Änderung des Augenblickswertes unterhalb der minimalen Eingangsspannung (UEmin) bis zu dem Wert 0 mit dem vorgegebenen $v_{Tmax}$ gleich bleibt, und daß gleichzeitig der Kurzschlußschalter (S2) derart getaktet ist, daß ein dem Kurzschlußschalter (S2) zugeordnetes Tastverhältnis oberhalb der minimalen Eingangsspannung (UEmin) mit 0 % gleich bleibt, während es sich unterhalb der minimalen Eingangsspannung (UEmin) entsprechend im Bereich von 0 bis zu dem vorgegebenen $v_{Tmax}$ ändert und dabei der Kurzschlußschalter (S2) jeweils mit dem getakteten Schalter (S1) schaltet.

3. Schaltnetzteil nach Anspruch 1,
**dadurch gekennzeichnet**, daß der Tiefsetzsteller entsprechend dem Prinzip eines 2-Transistor-Eintaktdurchflußwandlers ausgebildet ist, der zwei getaktete Schalter (S1, S1') aufweist, die synchron und dabei derart getaktet sind, daß sich gemäß der Änderung des Augenblickswertes der sinusförmigen Eingangsnetzwechselspannung (AC) von einer vorgegebenen Scheitelspannung aus bis zu der minimalen Eingangsspannung (UEmin) entsprechend die den einzelnen Schaltern (S1, S1') zugeordneten Tastverhältnisse jeweils im Bereich von 0 bis 50 % ändern, während sie bei einer Änderung des Augenblickswertes unterhalb der minimalen Eingangsspannung (UEmin) bis zu dem Wert 0 mit jeweils 50 % gleich bleiben, und daß gleichzeitig der Kurzschlußschalter (S2) derart getaktet ist, daß ein dem Kurzschlußschalter (S2) zugeordnetes Tastverhältnis oberhalb der minimalen Eingangsspannung (UEmin) mit 0 % gleich bleibt, während es sich unterhalb der minimalen Eingangsspannung (UEmin) entsprechend im Bereich von 0 bis 50 % ändert und dabei der Kurzschlußschalter (S2) jeweils mit den synchron getakteten Schaltern (S1, S1') schaltet.

4. Schaltnetzteil nach Anspruch 1,
**dadurch gekennzeichnet**, daß der Tiefsetzsteller entsprechend dem Prinzip eines Gegentaktdurchflußwandlers ausgebildet ist, der zwei getaktete Schalter (S1a, S1b) aufweist, die wechselweise und dabei derart getaktet sind, daß sich gemäß der Änderung des Augenblickswertes der sinusförmigen Eingangsnetzwechselspannung (AC) von einer vorgegebenen Scheitelspannung aus bis zu der minimalen Eingangsspannung (UEmin) entsprechend die den einzelnen Schaltern (S1a, S1b) zugeordneten Tastverhältnisse jeweils im Bereich von 0 bis 50 %, ändern, während sie bei einer Änderung des Augenblickswertes unterhalb der minimalen Eingangsspannung (UEmin) bis zu dem Wert 0 mit jeweils 50 % gleich bleiben, und daß gleichzeitig der Kurzschlußschalter (S2) derart getaktet ist, daß ein dem Kurzschlußschalter (S2) zugeordnetes Tastverhältnis oberhalb der minimalen Eingangsspannung (UEmin) mit 0 % gleich bleibt, während es sich unterhalb der minimalen Eingangsspannung (UEmin) entsprechend im Bereich von 0 bis 100 % ändert und dabei der Kurzschlußschalter (S2) jeweils mit jedem der beiden wechselweise getakteten Schaltern (S1a, S1b) schaltet.

5. Schaltnetzteil nach Anspruch 1,
**dadurch gekennzeichnet**, daß der Tiefsetzsteller entsprechend dem Prinzip eines stromgespeisten Gegentaktdurchflußwandlers ausgebildet ist, der drei getaktete Schalter (S1, SA, SB) aufweist, von denen zwei (SA, SB) unabhängig vom Augenblickswert der sinusförmigen Eingangsnetzwechselspannung (AC) wechselweise mit einem Tastverhältnis von jeweils 50 % getaktet sind und von denen einer (S1) derart getaktet ist, daß er mit jeweils einem der wechselweise getakteten Schaltern (SA, SB) schaltet und daß sich gemäß der Änderung des Augenblickswertes der sinusförmigen Eingangsnetzwechselspannung (AC) von einer vorgegebenen Scheitelspannung aus bis zu der minimalen Eingangsspannung (UEmin), entsprechend ein diesem Schalter (S1) zugeordnetes Tastverhältnis im Bereich von 0 bis 100 % ändert, während es bei einer Änderung des Augenblickswertes unterhalb der minimalen Eingangsspannung (UEmin) bis zu dem Wert 0 mit 100 % gleich bleibt, und daß gleichzeitig der Kurzschlußschalter (S2) derart getaktet ist, daß ein dem Kurzschlußschalter (S2) zugeordnetes Tastverhältnis oberhalb der minimalen Eingangsspannung (UEmin) mit 0 % gleich bleibt, während es sich unterhalb der minimalen Eingangsspannung (UEmin) entsprechend im Bereich von 0 bis 100 % ändert und dabei der Kurzschlußschalter (S2) jeweils mit jedem der beiden wechselweise getakteten Schaltern (SA, SB) schaltet.

6. Schaltnetzteil nach Anspruch 1,
**dadurch gekennzeichnet**, daß der Tiefsetzsteller entsprechend dem Prinzip eines stromgespeisten Gegentaktdurchflußwandlers ausgebildet ist, der drei getaktete Schalter (S1, SA, SB) aufweist, die derart getaktet sind, daß sich gemäß einer Änderung des Augenblickswertes der sinusförmigen Eingangsnetzwechselspannung (AC) von einer vorgegebenen Scheitelspannung aus bis zu einer minimalen Eingangsspannung (UEmin), bei der der Tiefsetzsteller gerade noch als solcher arbeitet, sich ein dem einen getakteten Schalter (S1) zugeordnetes Tastverhältnis entsprechend im Bereich von 0 bis 100 % ändert, während die Tastverhältnisse der beiden anderen Schalter (SA, SB), die wechselweise getaktet sind, mit jeweils 50 % gleich bleiben, und daß sich gemäß einer Änderung des Augenblickswertes unterhalb der minimalen Eingangsspannung (UEmin) bis zu dem Wert 0 sich die den beiden wechselweise überlappend getakteten Schaltern (SA, SB) zugeordneten Tastverhältnisse entsprechend im Bereich von 50 bis 100 % ändern, während das Tastverhältnis des einen Schalters (S1) mit 100 % gleich bleibt.

7. Schaltnetzteil nach Anspruch 1,
**dadurch gekennzeichnet**, daß der Tiefsetzsteller entsprechend dem Prinzip eines stromgespeisten Gegentaktdurchflußwandlers mit einem Übertrager (Tr) ausgebildet ist, der drei getaktete Schalter (S1, SA, SB) und einen auf Masse bezogenen primärseitig vor dem Übertrager angeordneten Kurzschlußschalter (S2) aufweist, die derart getaktet sind, daß die Kombination aus Tiefsetzsteller und nachfolgendem Kurzschlußschalter (S2) abhängig von einer minimalen Eingangsspannung (UEmin), bei der der Tiefsetzsteller gerade noch als solcher arbeitet, einmal nur als Tiefsetzsteller und einmal gleichzeitig als Tiefsetzsteller und Hochsetzsteller arbeitet.

8. Schaltnetzteil nach Anspruch 7,
**dadurch gekennzeichnet**, daß die getakteten Schalter (S1, SA, SB) und der Kurzschlußschalter (S2) derart getaktet sind, daß sich gemäß einer Änderung des Augenblickswertes einer sinusförmigen Eingangsnetzwechselspannung (AC) von einer vorgegebenen Scheitelspannung aus bis zu einer minimalen Eingangsspannung (UEmin), bei der der Tiefsetzsteller gerade noch als solcher arbeitet, sich ein dem einen getakteten Schalter (S1) zugeordnetes Tastverhältnis entsprechend im Bereich von 0 bis 100 % ändert, während die Tastverhältnisse der beiden anderen Schalter (SA, SB), die wechselweise getaktet sind, mit jeweils 50 %, und ein dem Kurzschlußschalter (S2) zugeordnetes Tastverhältnis mit 0 % gleich bleiben, und daß sich gemäß einer Änderung des Augenblickswertes unterhalb der minimalen Eingangsspannung (UEmin) bis zu dem Wert 0 die den beiden wechselweise getakteten Schaltern (SA, SB) zugeordneten Tastverhältnisse mit jeweils 50 %, und das dem einen getakteten Schalter (S1) zugeordnete Tastverhältnis mit 100 % gleich bleiben, während sich das Tastverhältnis des Kurzschlußschalters (S2) entsprechend im Bereich von 0 bis 100 % ändert.

9. Schaltnetzteil nach einem der vorhergehenden Ansprüche,
**dadurch gekennzeichnet**, daß die Taktfrequenz des Tiefsetzstellers sehr viel größer ist als die Wechselfrequenz der sinusförmigen Eingangsnetzwechselspannung (AC).

## Claims

1. Switched-mode power supply having a sinusoidal current input and avoiding input current surges, essentially comprising an input mains rectifier (GL), a downstream voltage regulator (SPR) and, as the case may be, an output capacitor (CA), the voltage regulator (SPR) being constructed as a mains-disconnecting step-down controller with active current limitation which is rapidly clocked as a function of the instantaneous value of a sinusoidal input AC supply voltage fed into the switched-mode power supply and in the process regulates the input current (JE) in a manner proportional to the input AC supply voltage (AC), characterized in that a possibly enlarged output capacitor (CA) is provided, and in that there is arranged between the output terminals of the step-down controller a short-circuiting switch (S2) which has a short-circuit-proofing diode (DS), which is arranged in an output direct-axis branch upstream of the output capacitor (CA) and is polarized in the direction of the output, and is clocked in relation to the step-down controller in such a way that, depending on a minimum input voltage (UEmin) at which the step-down controller still continues to operate as such, the combination of step-down controller and downstream short-circuiting switch (S2) operates now only as a step-down controller and now simultaneously as a step-down controller and step-up controller.

2. Switched-mode power supply according to Claim 1, characterized in that the step-down controller is constructed in accordance with the principle of a 1-transistor single-ended forward converter which has a clocked switch (S1) which is clocked in such a way that in accordance with the change in the instantaneous value of the sinusoidal input AC supply voltage (AC), starting from a prescribed peak voltage down to the minimum input voltage (UEmin), a pulse duty factor assigned to the switch (S1) varies correspondingly in the range from 0 to a prescribed $v_{Tmax}$, while in the case of a change in the instantaneous value below the minimum input voltage (UEmin) to the value 0 it remains the same at the prescribed $v_{Tmax}$, and in that the short-circuiting switch (S2) is simultaneously clocked in such a way that a pulse-duty factor assigned to the short-circuiting switch (S2) remains the same above the minimum input voltage (UEmin) at 0 %, while below the minimum input voltage (UEmin) it varies correspondingly in the range from 0 to the prescribed $v_{Tmax}$ and in the process the short-circuiting switch (S2) is respectively switched by the clocked switch (S1).

3. Switched-mode power supply according to Claim 1, characterized in that the step-down controller is constructed in accordance with the principle of a 2-transistor single-ended forward converter which has two clocked switches (S1, S1') which are clocked synchronously and in such a way in the process that in accordance with the change in the instantaneous value of the sinusoidal input AC supply voltage (AC), starting from a prescribed peak voltage down to the minimum input voltage (UEmin), the pulse duty factors assigned to the individual switches (S1, S1') vary correspondingly in each case in the range from 0 to 50%, while in the case of a change in the instantaneous value below the minimum input voltage (UEmin) to the value 0 they remain the same at in each case 50%, and in that the short-circuiting switch (S2) is simultaneously clocked in such a way that a pulse duty factor assigned to the short-circuiting switch (S2) remains the same above the minimum input voltage (UEmin) at 0 %, while below the minimum input voltage (UEmin) it varies correspondingly in the range from 0 to 50 % and in the process the short-circuiting switch (S2) is respectively switched by the synchronously clocked switches (S1, S1').

4. Switched-mode power supply according to Claim 1, characterized in that the step-down controller is constructed in accordance with the principle of a push-pull forward converter which has two clocked switches (S1a, S1b) which are clocked alternately and in such a way in the process that in accordance with the change in the instantaneous value of the sinusoidal input AC supply voltage (AC), starting from a prescribed peak voltage down to the minimum input voltage (UEmin), the pulse duty factors assigned to the individual switches (S1a, S1b) vary correspondingly in each case in the range from 0 to 50 %, while in the case of a change in the instantaneous value below the minimum input voltage (UEmin) to the value 0 they remain the same at in each case 50 %, and in that the short-circuiting switch (S2) is simultaneously clocked in such a way that a pulse duty factor assigned to the short-circuiting switch (S2) remains the same above the minimum input voltage (UEmin) at 0 %, while below the minimum input voltage (UEmin) it varies correspondingly in the range from 0 to 100 % and in the process the short-circuiting switch (S2) is respectively switched by each of the two alternately clocked switches (S1a, S1b).

5. Switched-mode power supply according to Claim 1, characterized in that the step-down controller is constructed in accordance with the principle of a current-fed push-pull forward converter which has three clocked switches (S1, SA, SB), of which two (SA, SB) are clocked, independently of the instantaneous value of the sinusoidal input AC supply voltage (AC), alternately with a pulse duty factor of respectively 50 %, and of which one (S1) is clocked in such a way that it switches with respectively one of the alternately clocked switches (SA, SB) and that in accordance with the change in the instantaneous value of the sinusoidal input AC supply voltage (AC), starting from a prescribed peak voltage down to the minimum input voltage (UEmin), a pulse duty factor assigned to this switch (S1) varies correspondingly in the range from 0 to 100 %, while in the case of a change in the instantaneous value below the minimum input voltage (UEmin) to the value 0 it remains the same at 100 %, and in that the short-circuiting switch (S2) is simultaneously clocked in such a way that a pulse duty factor assigned to the short-circuiting switch (S2) remains the same above the minimum input voltage (UEmin) at 0 %, while below the minimum input voltage (UEmin) it varies correspondingly in the range from 0 to 100 % and in the process the short-circuiting switch (S2) is respectively switched by each of the two alternately clocked switches (SA, SB).

6. Switched-mode power supply according to Claim 1, characterized in that the step-down controller is constructed in accordance with the principle of a current-fed push-pull forward converter which has three clocked switches (S1, SA, SB) which are clocked in such a way that in accordance with a change in the instantaneous value of the sinusoidal input AC supply voltage (AC), starting from a prescribed peak voltage down to a minimum input voltage (UEmin), at which the step-down controller still continues to operate as such, a pulse duty factor assigned to one clocked switch (S1) varies correspondingly in the range from 0 to 100 %, while the pulse duty factors of the two other switches (SA, SB), which are clocked alternately, remain the same at respectively 50 %, and in that in accordance with a change in the instantaneous value below the minimum input voltage (UEmin) to the value 0 the pulse duty factors assigned to the two switches (SA, SB) clocked in an alternately overlapping manner vary correspondingly in the range from 50 to 100 %, while the pulse duty factor of one switch (S1) remains the same at 100 %.

7. Switched-mode power supply according to Claim 1, characterized in that the step-down controller is constructed in accordance with the principle of a current-fed push-pull forward converter with a transformer (Tr), which has three clocked switches (S1, SA, SB) and a short-circuiting switch (S2) with respect to earth and arranged on the primary side upstream of the transformer, which are clocked in such a way that, depending on a minimum input voltage (UEmin) at which the step-down controller still continues to operate as such, the combination of step-down controller and downstream short-circuiting switch (S2) operates now only as a step-down controller and now simultaneously as a step-down controller and step-up controller.

8. Switched-mode power supply according to Claim 7, characterized in that the clocked switches (S1, SA, SB) and the short-circuiting switch (S2) are clocked in such a way that in accordance with a change in the instantaneous value of a sinusoidal input AC supply voltage (AC), starting from a prescribed peak voltage down to a minimum input voltage (UEmin) at which the step-down controller still continues to operate as such, a pulse duty factor assigned to one clocked switch (S1) varies correspondingly in the range from 0 to 100 %, while the pulse duty factors of the two other switches (SA, SB), which are clocked alternately, remain the same at respectively 50 % and a pulse duty factor assigned to the short-circuiting switch (S2) remains the same at 0 %, and in that in accordance with a change in the instantaneous value below the minimum input voltage (UEmin) to the value 0 the pulse duty factors assigned to the two alternately clocked switches (SA, SB) remain the same at respectively 50 %, and the pulse duty factor assigned to one clocked switch (S1) remains the same at 100 %, while the pulse duty factor of the short-circuiting switch (S2) varies correspondingly in the range from 0 to 100 %.

9. Switched-mode power supply according to one of the preceding claims, characterized in that the clock frequency of the step-down controller is very much higher than the alternating frequency of the sinusoidal input AC supply voltage (AC).

## Revendications

1. Alimentation à découpage recevant un courant sinusoïdal empêchant les surintensités, constituée essentiellement d'un redresseur (GL) de secteur d'entrée, d'un régulateur (SPR) de tension branché en aval, et éventuellement d'un condensateur (CA) de sortie, le régulateur (SPR) de tension étant constitué sous la forme d'un régulateur à la valeur basse fréquence, qui est cadencé de façon rapide en fonction de la valeur instantanée d'une tension (AC) de secteur d'entrée alternative, sinusoïdale et envoyée à l'alimentation à découpage, qui règle le courant (JE) d'entrée proportionnellement à la tension (AC) alternative de secteur d'entrée, qui isole du secteur et qui limite le courant de façon active, caractérisée en ce qu'il est prévu un condensateur (CA) de sortie éventuellement de plus grande capacité et un interrupteur (S2) de court-circuit, comportant une diode (DS) de protection contre les court-circuits, disposée dans une branche longitudinale de sortie devant le condensateur (CA) de sortie et polarisée en direction de la sortie, est branché entre les bornes de sortie du régulateur à la valeur basse fréquence et est cadencé par rapport au régulateur à la valeur basse fréquence, de sorte que la combinaison du régulateur à la valeur basse fréquence et de l'interrupteur (S2) de court-circuit branché en aval travaille en fonction d'une tension (UEmin) minimale d'entrée, pour laquelle le régulateur à la valeur basse fréquence fonctionne juste encore en tant que tel, tantôt seulement en tant que régulateur à la valeur basse fréquence et tantôt à la fois en tant que régulateur à la valeur basse fréquence et que régulateur à la valeur haute fréquence.

2. Alimentation à découpage suivant la revendication 1 caractérisée en ce que le régulateur à la valeur basse fréquence est formé suivant le principe d'un convertisseur à un transistor, ne laissant passer qu'une alternance et comportant un interrupteur (S1) cadencé de telle sorte qu'un taux d'utilisation, qui est le rapport durée de fermeture/durée de la période de cadence, associé à l'interrupteur (S1) varie de 0 à une valeur $v_{Tmax}$ prescrite, suivant la variation de la valeur instantanée de la tension (AC) alternative de secteur d'entrée d'une tension de crête prescrite à la tension (UEmin) minimale d'entrée, tandis que le taux reste égal à la valeur $v_{Tmax}$ prescrite pour une variation de la valeur instantanée en-dessous de la tension (UEmin) minimale d'entrée jusqu'à la valeur 0, et l'interrupteur (S2) est en même temps cadencé, de sorte qu'un taux d'utilisation associé à l'interrupteur (S2) de court-circuit reste égal à 0% pour une variation de la valeur instantanée au-dessus de la tension (UEmin) minimale d'entrée, tandis que le taux varie de façon correspondante de 0 à la valeur $v_{Tmax}$ prescrite pour une variation de la valeur instantanée en-dessous de la tension (UEmin) minimale d'entrée et que l'interrupteur (S2) de court-circuit commute ainsi respectivement avec l'interrupteur (1) cadencé.

3. Alimentation à découpage suivant la revendication 1, caractérisée en ce que le régulateur à la valeur basse fréquence est formé suivant le principe du transformateur à deux transistors ne laissant passer qu'une alternance, et comportant deux interrupteurs (S1, S1′) cadencés, qui sont cadencés de façon synchrone, de sorte que les taux d'utilisation associés aux différents interrupteurs (S1, S1′) varient chacun de 0 à 50% suivant la variation de la valeur instantanée de la tension (AC) de secteur d'entrée alternative sinusoïdale d'une tension de crête prescrite à la tension (UEmin) minimale d'entrée de façon correspondante, tandis que ces taux restent chacun égaux à 50% pour une variation de la valeur instantanée en-dessous de la tension (UEmin) minimale d'entrée jusqu'à la valeur 0, et l'interrupteur (S2) de court-circuit est en même temps cadencé, de sorte qu'un taux d'utilisation associé à l'interrupteur (S2) de court-circuit reste égal à 0% pour une variation de la valeur instantanée au-dessus de la tension (UEmin) minimale d'entrée, tandis que ce taux varie de façon correspondante de 0 à 50% pour une variation de la valeur instantanée en-dessous de la tension (UEmin) minimale d'entrée, et que l'interrupteur (S2) de court-circuit commute respectivement avec les interrupteurs (S1, S1′) cadencés de façon synchrone.

4. Alimentation à découpage suivant la revendication 1, caractérisée en ce que le régulateur à la valeur basse fréquence est formé suivant le principe d'un convertisseur de transmision symétrique, comportant deux interrupteurs (S1a, S1b), qui sont cadencés tour à tour et de sorte que les taux d'utilisation associés aux différents interrupteurs (S1a, S1b) varient chacun de 0 à 50% suivant la variation de la valeur instantanée de la tension (AC) de secteur d'entrée alternative sinusoïdale d'une tension de crête prescrite jusqu'à la tension (UEmin) minimale d'entrée de façon correspondante, tandis que ces taux restent chacun égaux à 50% pour une variation de la valeur instantanée en-dessous de la tension (UEmin) minimale d'entrée jusqu'à la valeur 0, et l'interrupteur (S2) de court-circuit est en même temps cadencé, de sorte qu'un taux d'utilisation associé à l'interrupteur (S2) de court-circuit reste égal à 0% pour une variation de la valeur instantanée au-dessus de la tension (UEmin) minimale d'entrée, tandis que ce taux varie de 0 à 100% pour une variation de la valeur instantanée en-dessous de la tension (UEmin) minimale d'entrée de façon correspondante, et que l'interrupteur (S2) de court-circuit commute respectivement avec chacun des deux interrupteurs (S1a, S1b) cadencés tour à tour.

5. Alimentation à découpage suivant la revendication 1, caractérisée en ce que le régulateur à la valeur basse fréquence est formé suivant le principe d'un convertisseur de transmission symétrique alimenté en courant, comportant trois interrupteurs (S1, SA, SB) cadencés, dont deux (SA, SB) sont cadencés indépendamment de la valeur instantanée de la tension (AC) de secteur d'entrée alternative sinusoïdale avec un taux d'utilisation de respectivement 50% et dont un (S1) est cadencé, de sorte qu'il commute avec respectivement un des interrupteurs (SA, SB) cadencés tour à tour et qu'un taux d'utilisation associé à cet interrupteur (S1) varie de 0 à 100% suivant la variation de la valeur instantanée de la tension (AC) de secteur d'entrée alternative sinusoïdale d'une tension de crête prescrite jusqu'à la tension (UEmin) minimale d'entrée de façon correspondante, tandis que ce taux reste égal à 100% pour une variation de la valeur instantanée en-dessous de la tension (UEmin) minimale d'entrée jusqu'à la valeur 0, et l'interrupteur (S2) de court-circuit est en même temps cadencé, de sorte qu'un taux d'utilisation associé à l'interrupteur (S2) de court-circuit reste égal à 0% pour une variation de la valeur instantanée au-dessus de la tension (UEmin) minimale d'entrée, tandis que ce taux varie de 0 à 100% pour une variation de la valeur instantanée au-dessous de la tension (UEmin) minimale d'entrée de façon correspondante, et que l'interrupteur (S2) de court-circuit commute respectivement avec chacun des deux interrupteurs (SA, SB) cadencés tour à tour.

6. Alimentation à découpage suivant la revendication 1, caractérisée en ce que le régulateur à la valeur basse fréquence est formé suivant le principe d'un convertisseur de transmission symétrique alimenté en courant, comportant trois interrupteurs (S1, SA, SB) cadencés, de sorte qu'un taux d'utilisation associé à l'un (S1) des interrupteurs cadencés varie de 0 à 100% suivant la variation de la valeur instantanée de la tension (AC) de secteur d'entrée alternative sinusoïdale d'une tension de crête prescrite à une tension (UEmin) minimale d'entrée, pour laquelle le régulateur à la valeur basse fréquence travaille juste encore en tant que tel, tandis que les taux d'utilisation des deux autres interrupteurs (SA, SB) qui sont cadencés tour à tour, restent chacun égaux à 50%, et que les taux d'utilisation associés aux deux interrupteurs (SA, SB) cadencés tour à tour avec chevauchement varient de 50 à 100% pour une variation de la valeur instantanée en-dessous de la tension (UEmin) minimale d'entrée jusqu'à la valeur 0 de façon correspondante, tandis que le taux d'utilisation de l'autre interrupteur (S1) reste égal à 100%.

7. Alimentation à découpage suivant la revendication 1, caractérisée en ce que le régulateur à la valeur basse fréquence est formé suivant le principe d'un convertisseur de transmission symétrique alimenté en courant ayant un transformateur (Tr), qui comporte trois interrupteurs (S1, SA, SB) cadencés et un interrupteur (S2) de court-circuit relié à la masse côté primaire devant le transformateur, qui sont cadencés de sorte que la combinaison régulateur à la valeur basse fréquence et interrupteur (2) de court-circuit branché en aval travaille en fonction d'une tension (UEmin) minimale d'entrée, pour laquelle le régulateur à la valeur basse fréquence travaille juste encore en tant que tel, tantôt seulement en tant que régulateur à la valeur basse fréquence, et tantôt à la fois en tant que régulateur à la valeur basse fréquence et régulateur à la valeur haute fréquence.

8. Alimentation à découpage suivant la revendication 7, caractérisée en ce que les interrupteurs (S1, SA, SB) cadencés et l'interrupteur (S2) de court-circuit sont cadencés, de sorte qu'un taux d'utilisation associé à l'un (S1) des interrupteurs cadencés varie de 0 à 100% pour une variation de la valeur instantanée d'une tension (AC) de secteur d'entrée alternative sinusoïdale d'une tension de crête prescrite à une tension (UEmin) minimale d'entrée, pour laquelle le régulateur à la valeur basse fréquence travaille encore en tant que tel, de façon correspondante, tandis que les taux d'utilisation des deux autres interrupteurs (SA, SB), qui sont cadencés tour à tour, restent égaux chacun à 50%, et qu'un taux d'utilisation associé à l'interrupteur (S2) de court-circuit reste égal à 0%, et les taux d'utilisation associés aux deux interrupteurs (SA, SB) cadencés tour à tour restent égaux à 50% pour une variation de la valeur instantanée en-dessous de la tension (UEmin) minimale d'entrée jusqu'à la valeur 0, et le taux d'utilisation associé à l'un des interrupteurs (S1) cadencé reste égal à 100%, tandis que le taux d'utilisation de l'interrupteur (S2) de court-circuit varie de façon correspondante de 0 à 100%.

9. Alimentation à découpage suivant l'une des revendications précédentes, caractérisée en ce que la fréquence de cadence du régulateur à la valeur basse fréquence est bien plus grande que la fréquence de la tension (AC) de secteur d'entrée alternative sinusoïdale.

FIG 1

FIG 2

FIG 3

# FIG 4

UE

UA

S1a  S1b

# FIG 5

S1

UE

UA

S2  SA  SB

# FIG 6

JE

t

EP 0 446 383 B1

# FIG 7